# EUROPEAN PATENT APPLICATION

(11) **EP 1 967 830 A1**
(43) Date of publication of application: **10.09.2008**
(21) Application number: 08152269.0
(22) Date of filing: 04.03.2008
(51) Int. Cl.: G01G 19/44

(54) **Scale**

(30) Priority: 07.03.2007 JP 2007056504
(71) Applicant: Omron Healthcare Co., Ltd., Kyoto 615-0084 (JP)
(72) Inventor: Kodaka, Shinya c/o Omron Healthcare Co., Ltd., Kyoto-shi Kyoto 615-0084 (JP); Tanaka, Shinya c/o Omron Healthcare Co., Ltd., Kyoto-shi Kyoto 615-0084 (JP); Iida, Hiroshi, Tokyo Tokyo 107-0052 (JP)
(74) Representative: Wilhelms · Kilian & Partner Patentanwälte

(57) **Abstract**

A scale includes a platform (1), load sensors (10L, 11L, 10R, 11R) provided at four corners inside the platform (1), and a display unit (5). Each load sensor (10L, 11L, 10R, 11R) has an elongate load cell (30) and a strain gauge (35). Each load cell (30) is arranged such that its longitudinal direction is approximately orthogonal to the direction connecting heel and toe of the foot placed on the platform (1). The display unit (5) is arranged at a central portion of the platform (1), and feet-receiving regions (1L, 1R) are set at opposite sides of the display unit (5). By such a structure, a scale allowing reduction in size while preventing degradation of measurement accuracy as much as possible can be realized.

## Description

### BACKGROUND OF THE INVENTION

### Field of the Invention

The present invention relates to a scale provided with load sensors having load cells.

### Description of the Background Art

A scale using load sensors having load cells generally includes a platform, load sensors provided at four corners inside the platform, and a display unit. Here, the display unit is arranged at a central portion on the front side of the platform, and feet-receiving regions are set on opposite, left and right sides of the display unit.

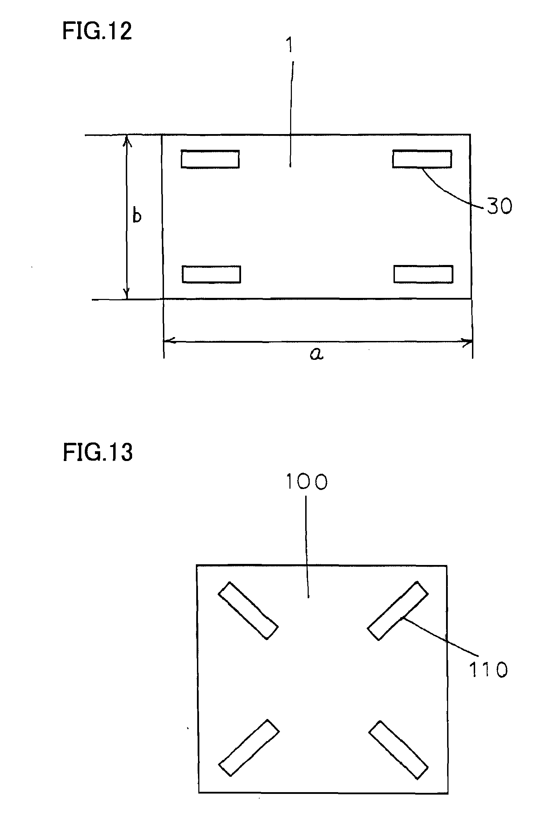

For measuring weight using the scale as such, the user stands on the platform with his/her left and right feet placed on the feet-receiving regions. Feet size and shape vary widely and, therefore, the positions where the left and right feet are received naturally vary person to person, both in front/rear and left/right directions, and the positions of the left and right feet of even one user received on feet-receiving regions may vary both in front/rear and left/right directions every time he/she measures weight. This means that load point for a load cell in each load sensor varies at every measurement, which affects measurement accuracy. In order to solve this problem, load cells 110 positioned at four corners in a scale 100 are arranged such that longitudinal directions of the cells are substantially aligned with the diagonals of scale 100, as shown in Fig. 13. By such an arrangement, even if the left and right feet-receiving positions should vary in front/rear and left/right directions, decrease in measurement accuracy can be prevented.

In an example of such a scale, the load cells are arranged along the diagonals of a weighing plate, with one end of respective cells being in contact with four corners of the weighing plate (for example, see Japanese Utility Model Registration No. 3128216).

Another example has been known in which load cells arranged at corners (four corners) of a stage each include a corner arrangement portion of the same shape as the corner, a slit provided at the center, a strain portion consisting of a cantilever-type piece formed by the slit, and a strain gauge arranged at the root side of the strain portion, and the load cells are positioned with the pieces arranged along the diagonals of the stage (for example, see Japanese Patent Laying-Open No. 2003-149038).

When one stands on the scale as described above, feet positions tend to fluctuate in the front/rear direction rather than the left/right direction, as it is easier ergonomically to recognize deviation in the left/right direction than the front/rear direction.

In this regard, in the scales described in Japanese Utility Model Registration No. 3128216 and Japanese Patent Laying-Open No. 2003-149038, load cells are arranged along the diagonals of the platform to prevent degradation of measurement accuracy derived from variation of feet-receiving positions both in the front/rear and left/right directions, and therefore, both front/rear and left/right directions are susceptible to the influence of unfair values and, as a result, further improvement in measurement accuracy has been difficult.

Further, because of the manner of arranging load cells, the platform (that is, the scale) must have a shape sufficiently large both in the front/rear and left/right directions. Specifically, with the conventional arrangement of load cells, degradation of measurement accuracy caused by deviation in feet-receiving positions both in the front/rear and left/right directions cannot satisfactorily be prevented no matter whether the platform is vertically long, that is, large in front/rear direction or horizontally long, that is, large in left/right direction. Therefore, the scales described in Japanese Utility Model Registration No. 3128216 and Japanese Patent Laying-Open No. 2003-149038 both have substantially square shape of a certain size as a whole.

There is a demand for a scale allowing further reduction in size while preventing degradation in measurement accuracy as much as possible and, the conventional scales described above cannot meet such a demand.

### SUMMARY OF THE INVENTION

Therefore, an object of the present invention is to provide a scale allowing further reduction in size while preventing degradation of measurement accuracy as much as possible.

In order to attain the above-described object, the present invention provides a scale, including a platform, load sensors provided at four corner portions inside the platform, and a display unit; wherein the load sensors each include an elongate load cell and a strain gauge; the elongate load cell is arranged with its longitudinal direction approximately orthogonal to the direction (front/rear direction) connecting one's heel and toe of the foot placed on the platform (aligned with the left/right direction); the display unit is arranged at the center of the platform; and feet-receiving regions are provided on opposite sides of the display unit.

Focusing on the tendency that feet-receiving positions deviate in the front/rear direction rather than left/right direction when the user stands on the platform with his/her left and right feet positioned on the feet-receiving regions, in the scale, the load cells are arranged such that longitudinal direction of the load cells are aligned with the aforementioned orthogonal direction (left/right direction), so that error in measurement caused by the positional deviation in the front/rear direction can more effectively be compensated for. Thus, coupled with the tendency described above, further improvement of measurement accuracy can be attained.

Preferably, in the scale, the feet-receiving region has an angle of inclination different from that of a region outside the feet-receiving region (end portion). With the feet-receiving regions formed in this manner, coupled with the tendency that positional deviation in left/right direction is less likely than in the front/rear direction, deviation of feet-receiving positions in the left/right direction becomes much less likely. Specifically, when the user places his/her feet on the end portions of feet-receiving regions, he/she feels as if his/her feet slip or fall from the platform and, to avoid such situation, the user makes a conscious effort to surely place the feet on the feet-receiving regions. Thus, measurement accuracy can farther be improved.

Further, in the scale described above, preferably, length in the direction connecting one's heel and toe (front/rear direction) of the platform is shorter than the longitudinal direction (left/right direction) of the elongate load cell of the platform (that is, the platform is horizontally long). In the scale of the present invention, load cell is arranged with its longitudinal direction aligned with the left/right direction and, therefore, even if the length of the platform in front/rear direction is short and the feet-receiving positions should deviate in the front/rear direction, the positional deviation in the front/rear direction hardly deflects the load cell and hence, the load cell is not influenced by the positional deviation in the front/rear direction. By this structure, it becomes possible to make the scale compact, as the length in the front/rear direction of the platform is shorter.

The scale of the present invention has the basic structure for measuring weight, and, in addition, the platform may include a current electrode and a voltage electrode for the left foot and a current electrode and a voltage electrode for the right foot provided at the feet-receiving regions. The scale may further include a body composition calculating unit, causing a current to flow through the human body from the current electrode, detecting a voltage at the voltage electrode and calculating, using the detected voltage value, human body composition (at least one of body fat ratio, body fat amount and body fat volume). This allows measurement of not only weight but also body composition.

Here, desirably, the lateral width of the current electrode and the voltage electrode in the longitudinal direction of the elongate load cell corresponds to the lateral width of one's foot placed on the platform. By such an arrangement, when one places his/her feet on the feet-receiving regions of the platform, the foot surely contacts the current electrode and the voltage electrode, and measurement accuracy of body composition can be improved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a plan view (top view) of a scale in accordance with an embodiment of the present invention.
Fig. 2 is a bottom view of the scale shown in Fig. 1.
Fig. 3A is a front view of the scale viewed from the direction of arrow A shown in Fig. 1.
Fig. 3B is a side view of the scale viewed from the direction of arrow B shown in Fig. 1.
Fig. 4 is an enlarged cross-sectional view of a portion surrounded by circle C of Fig. 3A.
Fig. 5 is an enlarged cross-sectional view of a portion surrounded by circle D of Fig. 3B.
Fig. 6 is a perspective view showing an appearance of a load sensor provided in the scale shown in Fig. 1.
Fig. 7 is a side view of the load sensor provided in the scale shown in Fig. 1.
Fig. 8 is an exploded perspective view of the load sensor provided in the scale shown in Fig. 1.

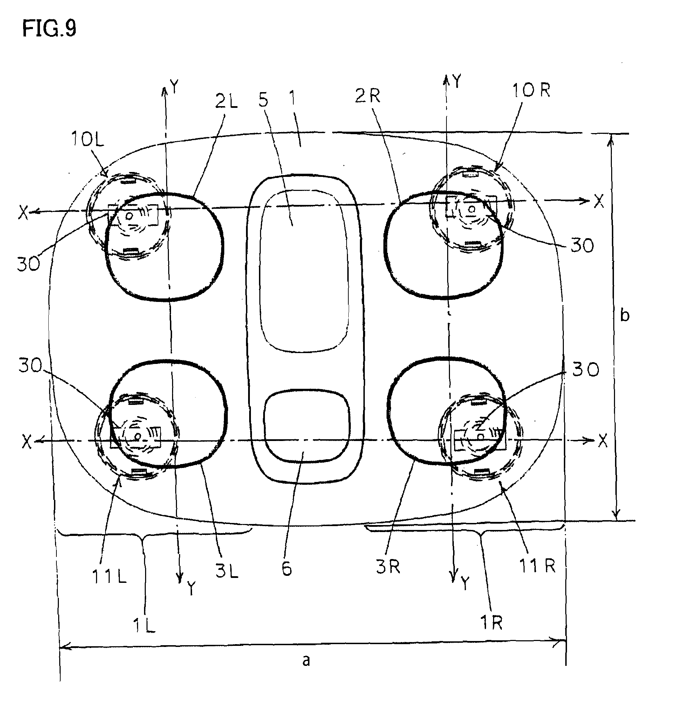

Fig. 9 is a plan view (top view) of the scale shown in Fig. 1.
Fig. 10A shows positions of left and right feet when one stands on the "front side" of the platform.
Fig. 10B shows positions of left and right feet when one stands on the "rear side" of the platform.
Fig. 10C is a graph representing measurement error caused by positional deviation of feet in the front/rear direction, of a comparative example of "diagonal arrangement" in which the longitudinal direction of the load cell is aligned with the diagonal of the platform and of the embodiment of "parallel arrangement" in which the longitudinal direction of the load cell is aligned with the left/right direction.
Fig. 11A shows positions of left and right feet when one stands on the "right side" of the platform.
Fig. 11B shows positions of left and right feet when one stands on the "left side" of the platform.
Fig. 11C is a graph representing measurement error caused by positional deviation of feet in the left/right direction, of a comparative example of "diagonal arrangement" in which the longitudinal direction of the load cell is aligned with the diagonal of the platform and of the embodiment of "parallel arrangement" in which the longitudinal direction of the load cell is aligned with the left/right direction.
Fig. 12 is a schematic illustration showing direction of load cell arrangement in the scale in accordance with the embodiment shown in Fig. 1.
Fig. 13 is a schematic illustration showing direction of load cell arrangement in the conventional example.

### DESCRIPTION OF THE PREFERRED EMBODIMENTS

In the following, an embodiment of the present invention will be described.

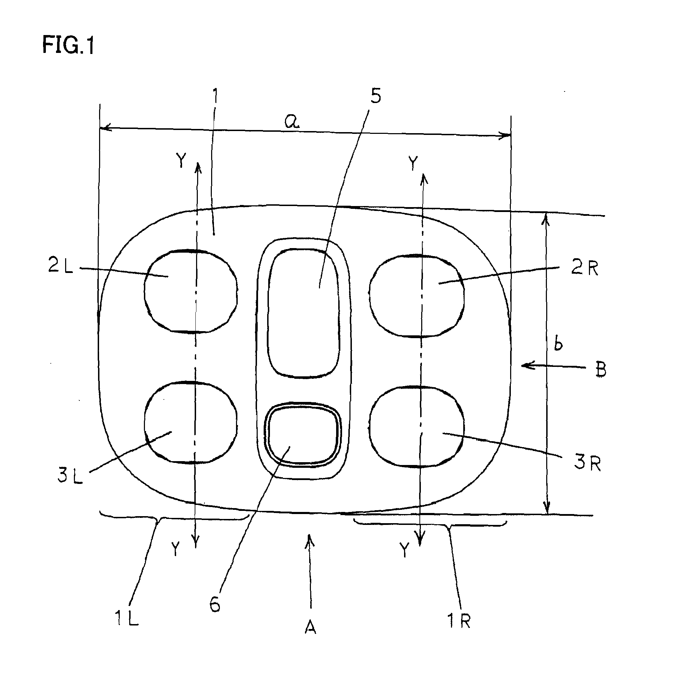

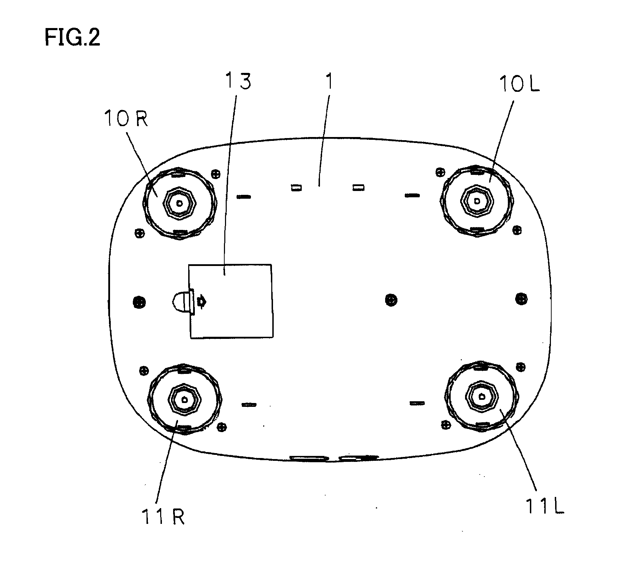

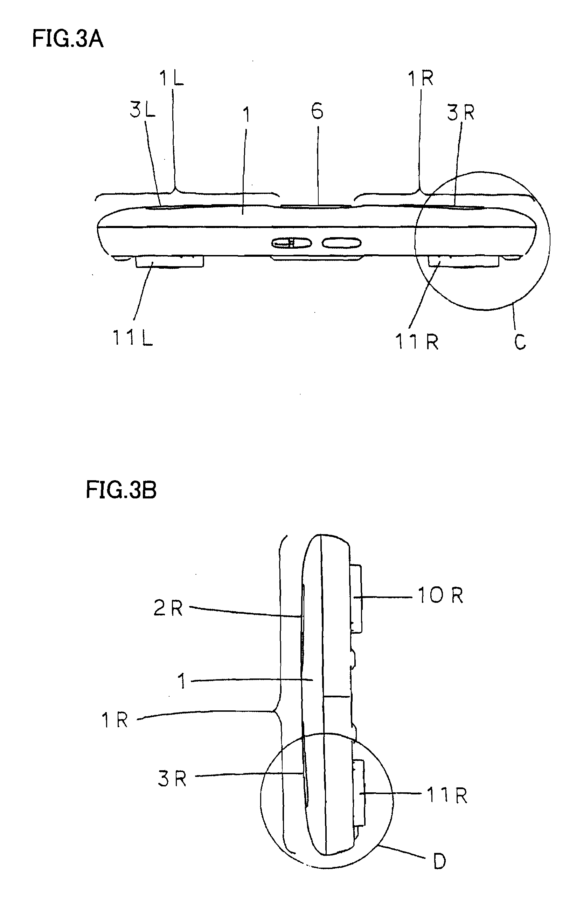

Fig. 1 is a plan view (top view), Fig. 2 is a bottom view, Fig. 3A is a front view from the direction of arrow A of Fig 1 and Fig. 3B is a side view from the direction of arrow B shown in Fig. 1, of the scale in accordance with the embodiment.

The scale measures not only weight but also body composition (body fat ratio, body fat amount and body fat volume), and has a platform 1 as the main body. At the central portion of the platform 1 (central portion in the left/right direction), a display unit (liquid crystal display) 5 displaying the weight measurement or body composition and an operation unit 6 are provided. On opposite, left and right sides of the display unit and operation unit 6, left foot receiving region 1L and a right foot receiving region 1R are set. On foot-receiving region 1L, a current electrode 2L and a voltage electrode 3L for the left foot are provided, and on foot-receiving region 1R, a current electrode 2R and a voltage electrode 3R are provided.

One characteristic (hereinafter referred to as the first characteristic) of the scale is that, when we represent the direction connecting the heel and toe of left and right feet placed on feet-receiving regions 1L and 1R, that is, the direction connecting electrodes 2L and 3L for the left foot and connecting electrodes 2R and 3R for the right foot as the front/rear direction (Y-axis direction) and the direction orthogonal thereto as the left/right direction (X-axis direction), the platform 1 is set to have the length b in the Y-axis direction shorter than the length a in the X-axis direction, that is, the platform has a horizontally long shape.

At four corners inside the platform 1, load sensors 10L, 11L, 10R and 11R also serving as legs for supporting platform 1 are arranged. Each of the load sensors 10L, 10R, 11L and 11R has an elongate load cell 30 and an elongate strain gauge 35, which will be described later. Further, on the back side of platform 1, a battery cover 13 is provided.

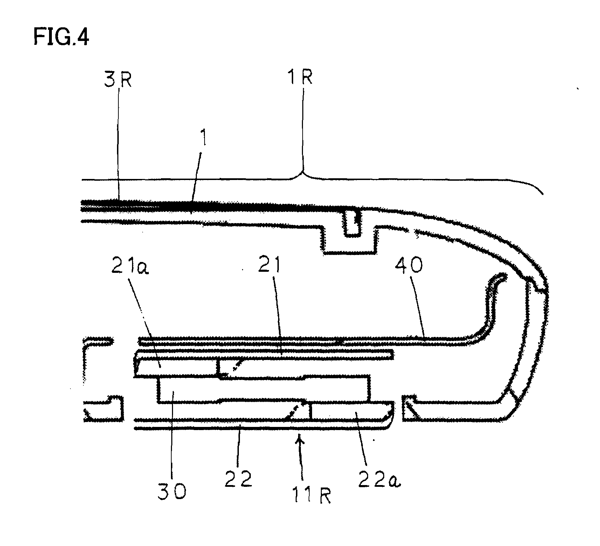

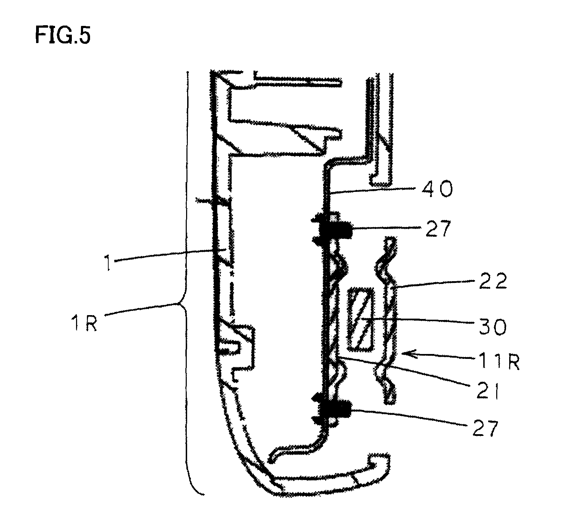

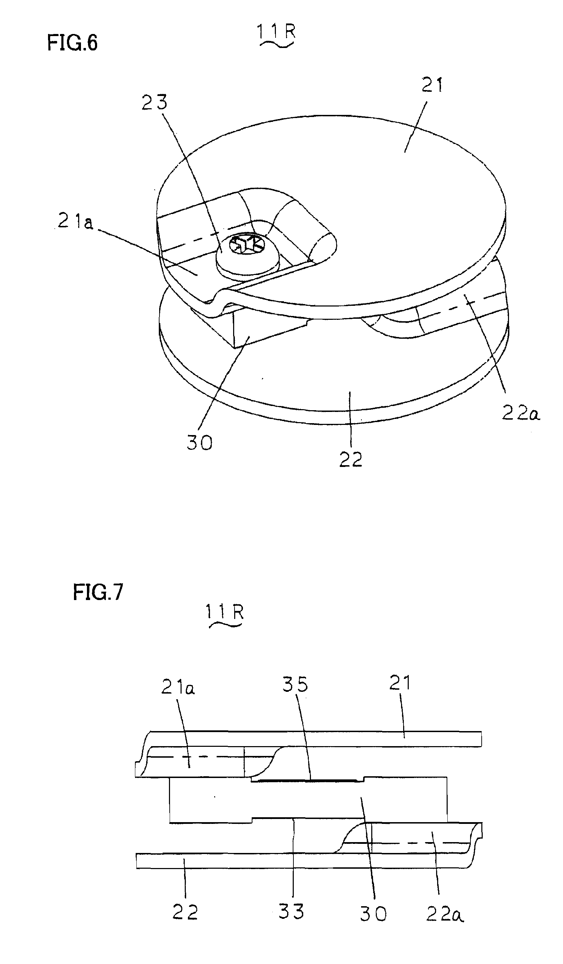

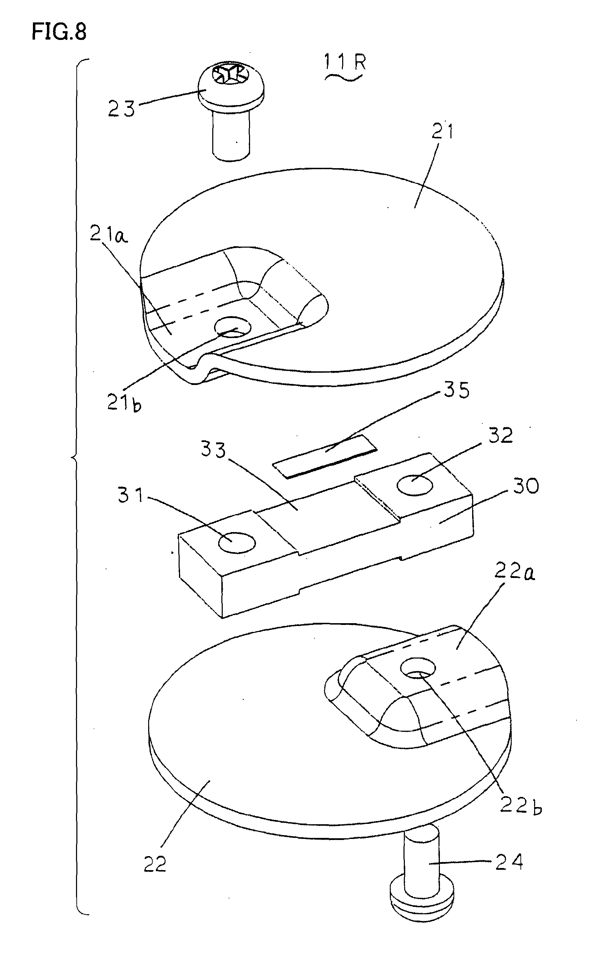

Next, the load sensors 10L, 10R, 11L and 11R as another characteristic portion of the scale will be described. Fig. 4 is an enlarged cross section of a portion surrounded by circle C of Fig. 3A, Fig. 5 shows an enlarged cross section of a portion surrounded by circle D of Fig. 3B, Fig. 6 is a perspective view showing the appearance of the load sensor, Fig. 7 is a side view and Fig. 8 is an exploded perspective view, of the load sensor.

As is best shown in Fig. 8, load sensor 11R (same in 10L, 11L and 10R) includes a circular top plate 21, a circular bottom plate 22, and a load cell 30 posed between top plate 21 and bottom plate 22. Top plate 21 has a recess 21 a, and a screw insertion hole 21b is formed in recess 21a. Bottom plate 22 has a protrusion 22a, and a screw insertion hole 22b is formed in protrusion 22a.

Load cell 30 has an elongate shape and has screw holes 31 and 32 at opposite ends. At a recessed portion 33 between screw holes 31 and 32, an elongate strain gauge 35 is attached. The longitudinal direction of load cell 30 is set to be the same as the longitudinal direction of strain gauge 35. Load cell 30 is set to a state posed between top plate 21 and bottom plate 22 when a screw 23 inserted through screw insertion hole 21b of top plate 21 is screwed in screw hole 31 and a screw 24 inserted through screw insertion hole 22b of bottom plate 22 is screwed in screw hole 32. Specifically, load cell 30 is set to a "beam" state with its one end supported by top plate 21 and the other end supported by bottom plate 22.

Load sensor 11R having such a structure is fixed to weighing plate 40 by a screw 27 at a corner inside the platform 1. Thus, bottom plate 22 protruding from the backside of platform 1 comes to be in contact with the scale-mounting surface. Accordingly, load to the feet-receiving surface of platform 1 is applied to four load sensors 10L, 10R, 11L and 11R through weighing plate 40 and load cells 30 as "beams" deflect. Correspondingly, strain gauge 35 is deflected and the load is detected in accordance with the amount of deflection.

Another characteristic (hereinafter referred to as the second characteristic) of the scale is that load cell 30 of each of the load sensors 10L, 11L, 10R and 11R is arranged such that its longitudinal direction is aligned with the direction (X-axis direction) orthogonal to the direction (Y-axis direction) connecting electrodes 2L and 3L for the left foot and electrodes 2R and 3R for the right foot.

A still further characteristic (hereinafter referred to as the third characteristic) is that though feet-receiving regions 1L and 1R are substantially flat as a whole, outer sides (end portions both in the front/rear and left/right directions) have larger angle of inclination, as can be seen from Figs. 3 to 5. Specifically, platform 1 has steeply curved surface from the top to the side surface.

Because of the first characteristic that the length b in the Y-axis direction of platform 1 is shorter than the length a in the X-axis direction (b < a), the scale (or platform 1) can be made compact.

Further, because of the second and third characteristics, a scale having high measurement accuracy, which is not susceptible to the influence of deviation of feet-receiving positions, can be realized. Specifically, there is inherently a tendency that positional deviation in left/right direction is less likely than in the front/rear direction as described above, and in the scale, platform 1 is adapted to have the shape of the third characteristic, so as to make use of the tendency. The third characteristic makes positional deviation in the left/right direction much less likely. The reason is that when the user places his/her feet on the end portions of feet-receiving regions 1L and 1R, he/she feels as if his/her feet slip or fall from the platform and to avoid such situation, the user makes a conscious effort to surely place the feet on the feet-receiving regions 1L and 1R.

The scale can be made compact because of the first characteristic as described above, while positional deviation in the front/rear direction influences measurement accuracy, as the length b of the scale in the front/rear direction is short. Such influence, however, can sufficiently be reduced by the second characteristic described above. When the second characteristic is adopted, load cells 30 come to be arranged along the left/right direction and load cells are hardly deflected by positional deviation in the front/rear direction, so that they are almost free of any influence of positional deviation in the front/rear direction.

Therefore, the scale, though compact in size, attains high measurement accuracy, not influenced by the deviation of feet positions in the left/right and front/rear directions, because of synergetic effect of the first to third characteristics described above.

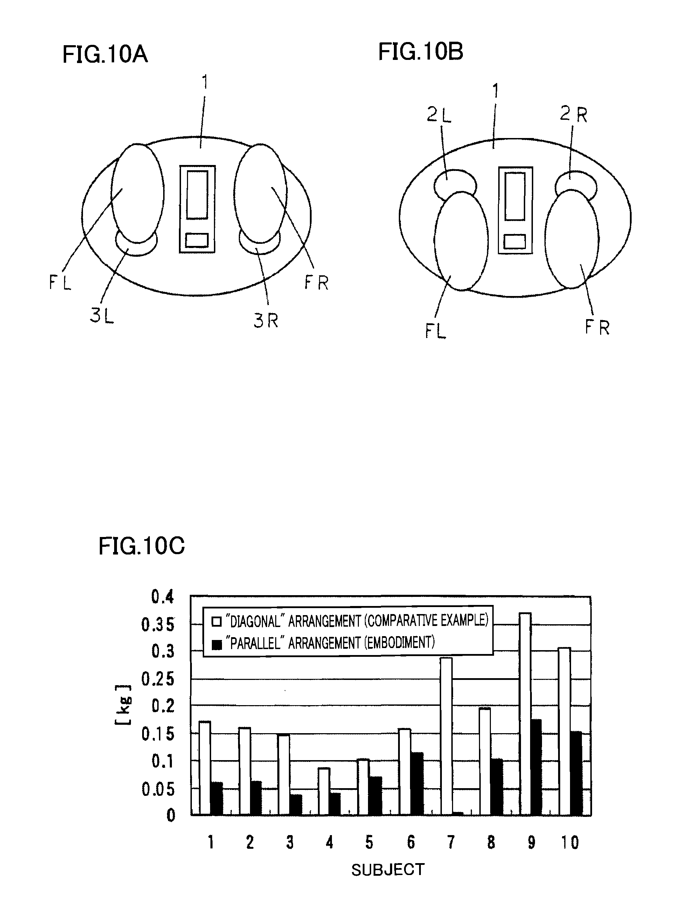

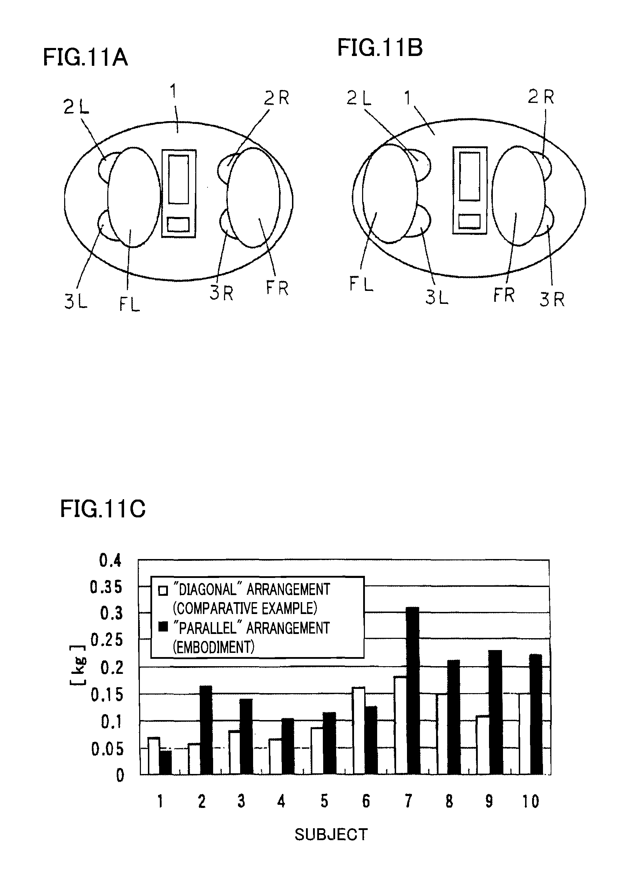

Such effects of the scale will be described with reference to experimental results. Figs. 10A to 10C and 11A to 11C represent the experiment in which 10 subjects measured weights three times each, in accordance with the instruction to "stand on the 'front side', 'rear side', 'right side' and 'left side'", and the average error of weight measurements of each subject was compared.

Fig. 10A indicates positions of left foot FL and right foot FR when one stands on the "front side" of platform 1, and Fig. 10B indicates positions of left foot FL and right foot FR when one stands on the "rear side" of platform 1. In Fig. 10C showing the result, "diagonal" arrangement represents an example in which longitudinal direction of the load cells is aligned with the diagonal of the platform (diagonals assuming platform 1 to be a rectangle, even if it is oval) as a comparative example, and "parallel" arrangement represents an example in which longitudinal direction of the load cells is aligned with the left/right direction (X-axis direction) as the embodiment. It can be seen that, for all subjects, error is smaller in "parallel" arrangement than "diagonal" arrangement and that the embodiment of the invention is less susceptible to the influence of positional deviation in the front/rear direction than the comparative example.

Fig. 11A indicates positions of left foot FL and right foot FR when one stands on the "right side" of platform 1, and Fig. 11B indicates positions of left foot FL and right foot FR when one stands on the "left side" of platform 1. From Fig. 11C showing the result, it can be seen that error in the "parallel" arrangement is smaller for only two subjects. For the remaining 8 subjects with large errors, the errors in the "parallel" arrangement and "diagonal" arrangement were compared. Absolute values of errors in general were smaller than the front/rear direction shown in Fig. 10C, and the influence of positional deviation in the left/right direction is not much different from the "diagonal" arrangement. The reason for this is that inherently the influence to the measurement accuracy of positional deviation in the front/rear direction is large than in the left/right direction. Therefore, it can be understood that the embodiment, which can better lessen the influence of positional deviation in the front/rear direction, attains sufficiently higher measurement accuracy than the comparative example.

When body composition is to be measured using the scale in accordance with the embodiment, to the left and right feet in contact with electrodes 2L and 3L for the left foot and electrodes 2R and 3R for the right foot, a current is caused to flow from a body composition calculating unit (not shown) through current electrodes 2L and 2R to the body, voltage is detected by voltage electrodes 3L and 3R, and using the detected voltage values, the body composition is calculated.

Here, it is desirable that lateral width (length in the left/right direction) of current electrodes 2L and 2R and voltage electrodes 3L and 3R corresponds to the width of feet placed on platform 1. Then, when one places his/her feet on feet-receiving regions 1L and 1R of platform 1, his/her feet surely contact current electrodes 2L and 2R as well as voltage electrodes 3L and 3R, and measurement accuracy of body composition can be improved.

Although the present invention has been described and illustrated in detail, it is clearly understood that the same is by way of illustration and example only and is not to be taken by way of limitation, the scope of the present invention being interpreted by the terms of the appended claims.

## Claims

1. A scale, comprising:
a platform (1) including feet-receiving regions (1L, 1R);
load sensors (10L, 10R, 11L, 11R) provided at four corners inside the platform (1); and
a display unit (5); wherein
said load sensors (10L, 10R, 11L, 11R) each include an elongate load cell (30) and a strain gauge (35);
said elongate load cell (30) is arranged with its longitudinal direction arranged approximately orthogonal to a direction connecting heel and toe of the foot placed on said platform (1);
said display unit is arranged at a central portion of said platform (1); and
said feet-receiving regions (1L, 1R) are provided on opposite sides of said display unit (5).

2. The scale according to claim 1, wherein
angle of inclination of said feet-receiving regions (1L, 1R) is different from angle of inclination of a region outside of said feet-receiving regions (1L, 1R).

3. The scale according to claim 1 or 2, wherein
length of said platform in a direction connecting heel and toe of the foot is shorter than the length of said platform (1) in the longitudinal direction of said elongate load cells (30).

4. The scale according to any one of claims 1 to 3, wherein
said platform (1) further includes a current electrode (2L) and a voltage electrode (3L) for the left foot and a current electrode (3L) and a voltage electrode (3R) for the right foot, on said feet-receiving regions (1L, 1R);
said scale further comprising
a body composition calculating unit causing a current to flow from said current electrodes (2L, 2R) to human body, detecting a voltage at said voltage electrodes (3L, 3R), and calculating body composition of said human body using the detected voltage value.

5. The scale according to claim 4, wherein
lateral width of said current electrode and said voltage electrode in the longitudinal direction of said elongate load cells corresponds to lateral width of the foot placed on said platform (1).

6. The scale according to claim 4 or 5, wherein
said body composition calculating unit calculates at least one of body fat ratio, body fat amount and body fat volume.
